# EUROPEAN PATENT APPLICATION

(11) **EP 4 546 382 A2**
(43) Date of publication of application: **30.04.2025**
(21) Application number: 24206659.5
(22) Date of filing: 15.10.2024
(51) Int. Cl.: H01G 4/008, H01G 4/012, H01G 4/12, H01G 4/232, H01G 4/30

(54) **DISCONTINUOUS INTERFACE LAYER FOR A MULTILAYER CERAMIC COMPONENT HAVING A ZONE RICH IN ALUMINIUM-NICKEL ALLOY IN CONTACT WITH THE INTERNAL NICKEL ELECTRODES, AND A ZONE RICH IN COPPER-ALUMINIUM ALLOY IN CONTACT WITH THE EXTERNAL COPPER ELECTRODES**

(30) Priority: 26.10.2023 KR 20230144625; 29.12.2023 KR 20230197417
(71) Applicant: Samsung Electro-Mechanics Co., Ltd., Gyeonggi-do (KR)
(72) Inventor: Kim, Yong Min, Suwon-si, Gyeonggi-do (KR); Kang, Bum Suk, Suwon-si, Gyeonggi-do (KR); Gu, Hyun Hee, Suwon-si, Gyeonggi-do (KR); Lee, Kang Ha, Suwon-si, Gyeonggi-do (KR); Lee, Chung Eun, Suwon-si, Gyeonggi-do (KR)
(74) Representative: Grünecker Patent- und Rechtsanwälte PartG mbB

(57) **Abstract**

A multilayer electronic component (100) comprising:

a body (110) including a dielectric layer (111) and an internal electrode (121, 122) alternately disposed with the dielectric layer (111);

an external electrode (131, 132) disposed on the body (110) and connected to the internal electrode (121, 122); and

a region (141, 142) containing Ni, Al and Cu,

wherein the internal electrode (121, 122) includes Ni, and

the external electrode (131, 132) contains Al and Cu.

Further, the region (141, 142) containing Ni, Al, and Cu, includes

- a first region (P1) adjacent to the internal electrode (121, 122), and

- a second region (P2) adjacent to the external electrode (131, 132), and wherein

- an Al-Ni alloy is disposed in the first region (P1), and

- an Al-Cu alloy is disposed in the second region (P2).

## Description

### CROSS-REFERENCE TO RELATED APPLICATION(S)

This application claims the benefit of priority to Korean Patent Application No. 10-2023-0197417 filed on December 29, 2023 and Korean Patent Application No. 10-2023-0144625 filed on October 26, 2023 in the Korean Intellectual Property Office, the disclosures of which are incorporated herein by reference in their entirety.

### TECHNICAL FIELD

The present disclosure relates to a multilayer electronic component.

### BACKGROUND

Multilayer Ceramic Capacitors (MLCCs), multilayer electronic components, are chip-type condensers mounted on the printed circuit boards of various electronic products such as video devices, for example, liquid crystal displays (LCDs) and plasma display panels (PDPs), computers, smartphones, and mobile phones to charge or discharge electricity therein or therefrom.

Multilayer ceramic capacitors may be used as components in various electronic devices due to a small size, high capacitance, and ease of mounting thereof.

Recently, as electronic devices have been miniaturized and have been implemented with higher performance, multilayer ceramic capacitors are also trending toward miniaturization and higher capacitance. Accordingly, the importance of ensuring high reliability of multilayer ceramic capacitors is increasing.

Additionally, as high-voltage charging of mobile devices becomes more common, there is a demand for devices that have excellent reliability at high voltages while being compact.

When contact between internal and external electrodes decreases, electrical connectivity between the internal and external electrodes may decrease, which may increase equivalent series resistance (ESR), and when high voltage is applied, defects such as arc burn may occur.

### SUMMARY

An aspect of the present disclosure is to provide a multilayer electronic component having relatively high reliability.

An aspect of the present disclosure is to improve connectivity between internal electrodes and external electrodes.

According to an aspect of the present disclosure, a multilayer electronic component includes a body including a dielectric layer and an internal electrode alternately disposed with the dielectric layer; an external electrode disposed on the body and connected to the internal electrode; and a region containing Ni, Al and Cu. The internal electrode includes Ni, and the external electrode contains Al and Cu.

According to an aspect of the present disclosure, a multilayer electronic component includes a body including a dielectric layer and internal electrodes alternately disposed with the dielectric layer; and an external electrode disposed on the body and including a base electrode layer connected to the internal electrodes. The base electrode layer includes Al, Cu, and glass.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 schematically illustrates a perspective view of a multilayer electronic component according to an embodiment;
FIG. 2 schematically illustrates a cross-sectional view taken along line I-I' of FIG. 1;
FIG. 3 schematically illustrates a cross-sectional view taken along line II-II' of FIG. 1;
FIG. 4 schematically illustrates a body in a disassembled state;
FIG. 5 schematically illustrates a portion of the body of FIG. 2;
FIG. 6 is an enlarged view illustrating area K1 of FIG. 2;
FIG. 7 is an enlarged view illustrating area K1 of FIG. 2 according to an alternate embodiment;
FIG. 8 is an enlarged view illustrating area K1 according to another alternate embodiment;
FIG. 9 is an enlarged view illustrating area K2 of FIG. 2;
FIG. 10 is a diagram corresponding to FIG. 2 according to an embodiment; and
FIG. 11 is an enlarged view illustrating area K3 of FIG. 10.

### DETAILED DESCRIPTION

Hereinafter, embodiments of the present disclosure will be described with reference to detailed embodiments and the accompanying drawings. However, the embodiment may be modified in various other forms, and the scope of the present disclosure is not limited to the embodiments described below. Further, the embodiments of the present disclosure are provided to describe the present disclosure in more detail to those skilled in the art. Accordingly, the shapes and sizes of elements in the drawings may be exaggerated for a clearer understanding, and elements indicated by the same reference numerals in the drawings are the same elements.

To clearly illustrate the present disclosure in the drawings, portions irrelevant to the description are omitted, and the sizes and thicknesses of respective components illustrated in the drawings are arbitrarily indicated for convenience of description, so the present disclosure is not necessarily limited to the illustration. In addition, components having the same function within the scope of the same concept will be described using the same reference numerals. Furthermore, throughout the specification, when a part "includes" a certain element, it means that other elements may be further included, rather than excluding other elements, unless otherwise stated.

In the drawings, the first direction may be defined as the stacking or thickness (T) direction, the second direction may be defined as the length (L) direction, and the third direction may be defined as the width (W) direction.

### Multilayer Electronic Component

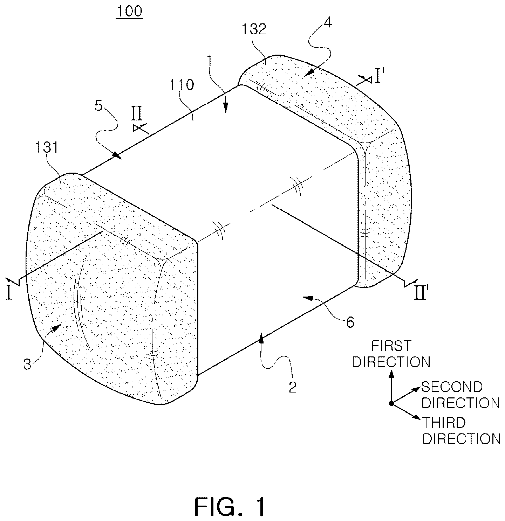

FIG. 1 schematically illustrates a perspective view of a multilayer electronic component according to an embodiment.

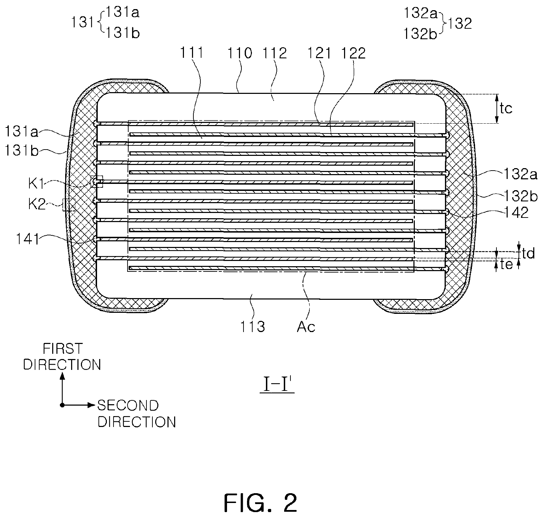

FIG. 2 schematically illustrates a cross-sectional view taken along line I-I' of FIG. 1.

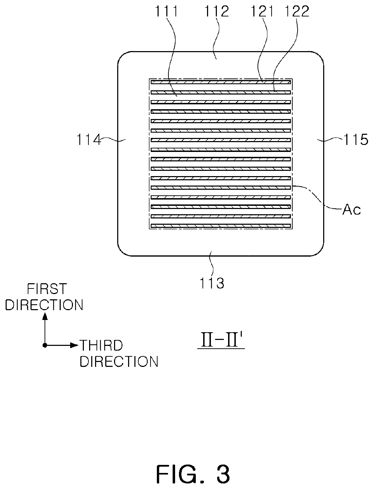

FIG. 3 schematically illustrates a cross-sectional view taken along line II-II' of FIG. 1.

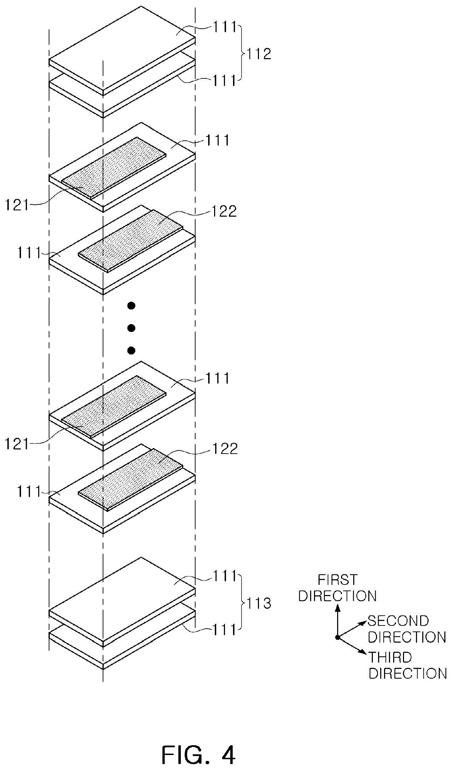

FIG. 4 schematically illustrates a body in a disassembled state.

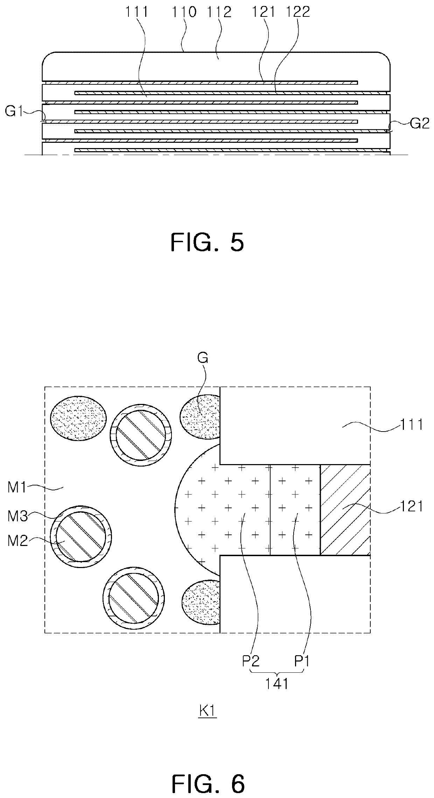

FIG. 5 schematically illustrates a portion of the body of FIG. 2.

FIG. 6 is an enlarged view illustrating area K1 of FIG. 2.

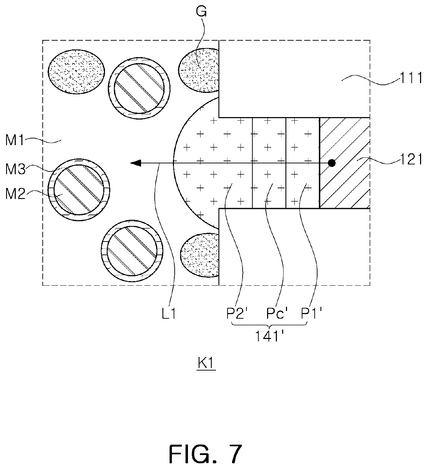

FIG. 7 is an enlarged view illustrating area K1 of FIG. 2 according to an alternate embodiment.

Hereinafter, a multilayer electronic component 100 according to an embodiment will be described in detail with reference to FIGS. 1 to 7. In addition, as an example of a multilayer electronic component, a multilayer ceramic capacitor (hereinafter referred to as an 'MLCC'), will be described, but the present disclosure is not limited thereto, and may also be applied to various multilayer electronic components using ceramic materials, such as inductors, piezoelectric elements, varistors, thermistors, or the like.

The multilayer electronic component 100 according to an embodiment may include a body 110 including a dielectric layer 111 and first and second internal electrodes 121 and 122 alternately disposed with the dielectric layer, and first and second external electrodes 131 and 132 disposed on the body and connected to the internal electrodes, and may include regions 141 and 142 containing Ni, Al and Cu. The internal electrodes may include Ni, and the external electrodes may include Al and Cu.

The connectivity between external and internal electrodes has a significant impact on the reliability of multilayer electronic components. When the contact between the internal and external electrodes decreases, the electrical connectivity between the internal and external electrodes decreases, which may increase the equivalent series resistance (ESR), and when high voltage is applied, defects such as arc burn may occur.

According to an embodiment, the reliability of the multilayer electronic component may be improved by improving the connectivity between the internal electrode and the external electrode by including regions 141 and 142 containing Ni, Al, and Cu.

Hereinafter, respective configurations included in the multilayer electronic component 100 according to an embodiment will be described.

The body 110 may have dielectric layers 111 and the first and second internal electrodes 121 and 122 alternately stacked.

There is no particular limitation on the detailed shape of the body 110, but as illustrated, the body 110 may have a hexahedral or similar shape. Due to shrinkage of the ceramic powder particles contained in the body 110 during the sintering process, the body 110 may not have a hexahedral shape with completely straight lines, but may have a substantially hexahedral shape.

The body 110 may have first and second surfaces 1 and 2 opposing in a first direction, third and fourth surfaces 3 and 4 connected to the first and second surfaces 1 and 2 and opposing in a second direction, and fifth and sixth surfaces 5 and 6 connected to the first and second surfaces 1 and 2, connected to the third and fourth surfaces 3 and 4, and opposing in a third direction.

As the margin area in which the first and second internal electrodes 121 and 122 are not disposed overlaps on the dielectric layer 111, a step due to the thickness of the first and second internal electrodes 121 and 122 occurs. Thus, a corner connecting the first surface and the third to fifth surfaces and/or a corner connecting the second surface and the third to fifth surfaces may have a shape contracted toward the center of the body 110 in the first direction when viewed from the first or second surface. Alternatively, due to the shrinkage behavior during the sintering process of the body, a corner connecting the first surface 1 and the third to sixth surfaces 3, 4, 5 and 6 and/or corners connecting the second surface 2 and the third to sixth surfaces 3, 4, 5 and 6 may have a shape contracted toward the center of the body 110 in the first direction when viewed from the first or second surface. Alternatively, to prevent chipping defects and the like, the edges connecting respective surfaces of the body 110 are rounded by performing a separate process. Thus, the corner connecting the first surface and the third to sixth surfaces and/or the corner connecting the second surface and the third to sixth surfaces may have a rounded shape.

On the other hand, to suppress the level difference caused by the first and second internal electrodes 121 and 122, after lamination, the internal electrodes are cut to be exposed to the fifth and sixth surfaces 5 and 6 of the body, and then, when forming first and second margin portions 114 and 115 by stacking a single dielectric layer or two or more dielectric layers on both sides of the capacitance formation portion Ac in the third direction (width direction), the portion connecting the first surface to the fifth and sixth surfaces and the portion connecting the second surface to the fifth and sixth surfaces may not have a contracted shape.

The plurality of dielectric layers 111 forming the body 110 are in a sintered state, and the boundaries between adjacent dielectric layers 111 may be integrated to the extent that it may be difficult to determine without using a scanning electron microscope (SEM). The number of stacked dielectric layers does not need to be particularly limited and may be determined considering the size of the multilayer electronic component. For example, the body may be formed by stacking 400 or more dielectric layers.

The dielectric layer 111 may be formed by producing a ceramic slurry containing ceramic powder, an organic solvent, and a binder, applying and drying the slurry on a carrier film to prepare a ceramic green sheet, and then by firing the ceramic green sheet. Ceramic powder is not particularly limited as long as sufficient capacitance may be obtained. For example, a barium titanate (BaTiO₃)-based powder may be used as the ceramic powder. For more detailed examples, ceramic powder may be at least one of BaTiO₃, (Ba₁₋ₓCaₓ)TiO₃ (0<x<1), Ba(Ti_{1-y}Ca_{y})O₃ (0<y<1), (Ba₁₋ₓCaₓ)(Ti_{1-y}2r_{y})O₃ (0<x<1, 0<y<1) and Ba(Ti_{1-y}Zr_{y})O₃ (0<y<1).

The average thickness td of the dielectric layer 111 does not need to be particularly limited, but may be, for example, 0.01 um to 10 um. In addition, the average thickness td of the dielectric layer 111 may be arbitrarily set depending on the required characteristics or use. For example, in the case of small IT electronic components, the average thickness td of at least one of the plurality of dielectric layers 111 may be 1.5 um or less to obtain miniaturization and high capacitance.

In this case, the average thickness td of the dielectric layer 111 may refer to the size of the dielectric layer 111 disposed between the first and second internal electrodes 121 and 122 in the first direction. The average thickness of the dielectric layer 111 may be measured by scanning cross-sections of the body 110 in the first and second directions with a scanning electron microscope (SEM) at a magnification of 10,000. In more detail, the average value may be measured by measuring the thickness at multiple points of one dielectric layer 111, for example, 30 points at equal intervals in the second direction. The 30 equally spaced points may be designated in the capacitance formation portion Ac, which will be described later. Additionally, if this average value measurement is expanded to 10 dielectric layers 111 and the average value is measured, the average thickness of the dielectric layers 111 may be further generalized.

The body 110 may include a capacitance formation portion (Ac), which is disposed inside the body 110 and in which capacitance is formed by including a first internal electrode 121 and a second internal electrode 122 disposed to face each other with the dielectric layer 111 interposed therebetween, and cover portions 112 and 113 formed above and below the capacitance formation portion Ac in the first direction.

In addition, the capacitance formation portion (Ac) is a part that contributes to forming the capacitance of the capacitor, and may be formed by repeatedly stacking a plurality of first and second internal electrodes 121 and 122 with the dielectric layer 111 interposed therebetween.

The cover portions 112 and 113 may include an upper cover portion 112 disposed above the capacitance formation portion Ac in the first direction and a lower cover portion 113 disposed below the capacitance formation portion Ac in the first direction.

The upper cover portion 112 and the lower cover portion 113 may be formed by stacking a single dielectric layer or two or more dielectric layers on the upper and lower surfaces of the capacitance formation portion Ac in the thickness direction, respectively, and basically, may play a role in preventing damage to the internal electrodes due to physical or chemical stress.

The upper cover portion 112 and the lower cover portion 113 do not include internal electrodes and may include the same material as the dielectric layer 111.

For example, the upper cover portion 112 and the lower cover portion 113 may include a ceramic material, for example, a barium titanate (BaTiO₃)-based ceramic material.

On the other hand, the thickness of the cover portions 112 and 113 does not need to be particularly limited. However, to more easily obtain miniaturization and high capacitance of the multilayer electronic component, the thickness tc of the cover portions 112 and 113 may be 60 µm or less.

The average thickness tc of the cover portions 112 and 113 may refer to the size in the first direction, and may be an average value of sizes of the cover portions 112 and 113 in the first direction, measured at five points at equal intervals above or below the capacitance formation portion Ac.

Additionally, the first and second margin portions 114 and 115 may be disposed on the sides of the capacitance formation portion Ac.

The first and second margin portions 114 and 115 may include a first margin portion 114 disposed on the fifth surface 5 of the body 110 and a second margin portion 115 disposed on the sixth surface 6. For example, the first and second margin portions 114 and 115 may be disposed on both end surfaces of the ceramic body 110 in the width direction.

As illustrated in FIG. 3, the first and second margin portions 114 and 115 may refer to the area between both ends of the first and second internal electrodes 121 and 122 and the boundary surface of the body 110 in a cross-section of the body 110 in the width-thickness (W-T) direction.

The first and second margin portions 114 and 115 may basically serve to prevent damage to the internal electrodes due to physical or chemical stress.

The first and second margin portions 114 and 115 may be formed by forming internal electrodes by applying conductive paste on a ceramic green sheet except for areas in which the margin portion is to be formed.

In addition, to suppress the level difference caused by the first and second internal electrodes 121 and 122, after lamination, the internal electrodes are cut to be exposed to the fifth and sixth surfaces 5 and 6 of the body, and then a single dielectric layer or two or more dielectric layers may be stacked on both sides of the capacitance formation portion Ac in the third direction (width direction) to form the first and second margin portions 114 and 115.

On the other hand, the width of the first and second margin portions 114 and 115 does not need to be particularly limited. However, to more easily obtain miniaturization and high capacitance of multilayer electronic components, the average width of the first and second margin portions 114 and 115 may be 45 um or less.

The average width of the first and second margin portions 114 and 115 may refer to the average size of the area in which the internal electrode is spaced apart from the fifth surface in the third direction and the average size of the area in which the internal electrode is spaced apart from the sixth surface in the third direction, and may be an average value of sizes of the first and second margin portions 114 and 115 in the third direction, measured at five points at equal intervals on the side of the capacitance formation portion Ac.

Accordingly, in an embodiment, the average size of the areas in which the first and second internal electrodes 121 and 122 are spaced apart from the fifth and sixth surfaces in the third direction may each be 45 um or less.

On the other hand, when a magnetic material is applied to the body 110 instead of a dielectric material, the multilayer electronic component may function as an inductor. The magnetic material may be, for example, ferrite and/or metallic magnetic particles. In the case in which the multilayer electronic component functions as an inductor, the internal electrode may be a coiled conductor.

Additionally, when a piezoelectric material is applied to the body 110 instead of a dielectric material, the multilayer electronic component may function as a piezoelectric element. The piezoelectric material may be, for example, lead zirconate titanate (PZT).

Additionally, when a ZnO-based or SiC-based material is applied to the body 110 instead of a dielectric material, the multilayer electronic component may function as a varistor. When a spinel-based material is applied to the body 110 instead of a dielectric material, the multilayer electronic component may function as a thermistor.

For example, the multilayer electronic component 100 according to an embodiment may function as an inductor, piezoelectric element, varistor, or thermistor as well as a multilayer ceramic capacitor by appropriately changing the material or structure of the body 110.

The first and second internal electrodes 121 and 122 may be disposed alternately with the dielectric layer 111, and for example, the first internal electrode 121 and the second internal electrode 122, which are a pair of electrodes having different polarities, may be disposed to face each other with the dielectric layer 111 interposed therebetween. The first internal electrode 121 and the second internal electrode 122 may be electrically separated from each other by the dielectric layer 111 disposed therebetween. In this case, the first and second internal electrodes 121 and 122 may be alternately disposed with the dielectric layer 111 in the first direction.

The first internal electrode 121 may be spaced apart from the fourth surface 4, but may extend toward the third surface 3. The second internal electrode 122 may be spaced apart from the third surface 3, but may extend toward the fourth surface 4. The first internal electrode 121 may be electrically connected to the first external electrode 131 on the third surface 3, and the second internal electrode 122 may be electrically connected to the second external electrode 132 on the fourth surface 4.

The conductive metal included in the first and second internal electrodes 121 and 122 may be at least one of Ni, Cu, Pd, Ag, Au, Pt, Sn, W, Ti, and alloys thereof.

In an embodiment, the first and second internal electrodes 121 and 122 may include Ni. As the first and second internal electrodes 121 and 122 contain Ni, an Al and Ni alloy may be easily formed in the regions 141 and 142 containing Ni, Al and Cu when forming the base electrode layers 131a and 132a. Additionally, the first and second internal electrodes 121 and 122 may contain Ni as a main component, and in this case, including Ni as the main component may indicate that when the cross section of the internal electrode is analyzed by SEM-EDS, the area ratio occupied by Ni compared to the total area of the internal electrode is 90% or more.

The method of forming the first and second internal electrodes 121 and 122 is not particularly limited. For example, the first and second internal electrodes 121 and 122 may be formed by applying a conductive paste for internal electrodes containing a conductive metal on a ceramic green sheet and firing the same. The method of applying the conductive paste for internal electrodes may be screen printing, gravure printing, or the like, but the present disclosure is not limited thereto.

The average thickness te of the first and second internal electrodes 121 and 122 does not need to be particularly limited, but may be, for example, 0.01 um to 3 um. In addition, the average thickness te of the first and second internal electrodes 121 and 122 may be arbitrarily set depending on required characteristics or use. For example, in the case of small IT electronic components, to obtain miniaturization and high capacitance, the average thickness te of at least one of the plurality of internal electrodes 121 and 122 may be 0.8 um or less.

In this case, the average thickness te of the internal electrode may be measured by scanning a cross-section of the body 110 in the first and second directions with a scanning electron microscope (SEM) at 10,000 magnification. In more detail, the average value may be measured by measuring the thickness at multiple points of one internal electrode (121, 122), for example, at 30 points at equal intervals in the second direction. The 30 equally spaced points may be designated in the capacitance formation portion (Ac). Additionally, if this average value measurement is expanded to 10 first and second internal electrodes 121 and 122 and the average value is measured, the average thickness of the first and second internal electrodes 121 and 122 may be further generalized.

In an embodiment, the regions 141 and 142 containing Ni, Al, and Cu may be disposed between the first and second internal electrodes 121 and 122 and the first and second external electrodes 131 and 132. The regions 141 and 142 containing Ni, Al and Cu may include a region 141 including first Ni, Al, and Cu disposed between the first internal electrode 121 and the first external electrode 131, and a region 142 containing second Ni, Al, and Cu disposed between the second internal electrode 122 and the second external electrode 132.

Additionally, the regions 141 and 142 containing Ni, Al, and Cu may extend from the ends of the first and second internal electrodes 121 and 122 to the base electrode layers 131a and 132a. In addition, Al is present in the entire region of the regions 141 and 142 containing Ni, Al, and Cu, and at least a portion of the Al included in the regions 141 and 142 containing Ni, Al, and Cu may form an alloy with at least one of Ni and Cu. Al included in the regions 141 and 142 containing Ni, Al, and Cu may be present in the form of Al, Al-Cu alloy, Al-Ni alloy, Al-Cu-Ni alloy, or the like. Accordingly, the connectivity between the first and second internal electrodes 121 and 122 and the first and second external electrodes 131 and 132 may be improved.

Al may stably form alloys with Ni and Cu. In addition, the melting point of Al is about 660 °C, which is lower than the sintering temperature of general sintering electrodes, and thus, it is easy to improve the connectivity between the first and second external electrodes 131 and 132 and the first and second internal electrodes 121 and 122 when forming the first and second external electrodes 131 and 132.

In an embodiment, the regions 141 and 142 containing Ni, Al and Cu may include a section where the Ni content decreases as the distance from the end of the first and second internal electrodes 121 and 122 increases, and a section where the Cu content decreases as the distance from the base electrode layers 131a and 132a increases. This concentration gradient of Ni content and Cu content may be because Ni contained in the first and second internal electrodes 121 and 122 diffuses into the regions 141 and 142 containing Ni, Al and Cu, and Cu contained in the first and second external electrodes 131 and 132 diffuses into the regions 141 and 142 containing Ni, Al, and Cu.

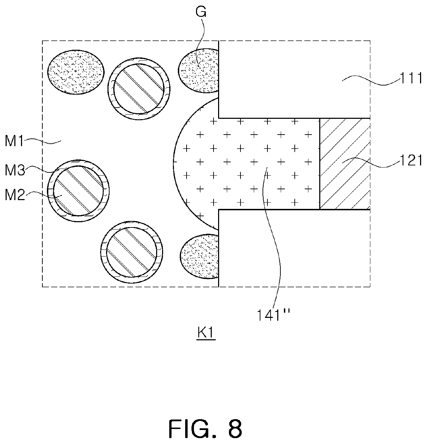

FIG. 6 is an enlarged view illustrating the K1 area of FIG. 2. FIG. 7 is a diagram corresponding to FIG. 6 according to an embodiment. FIG. 8 is a diagram corresponding to FIG. 6 according to another embodiment.

The K1 area is an enlarged illustration of a portion of the first external electrode 131, the region 141 containing first Ni, Al and Cu, and a portion of the first internal electrode 121. The only difference is that the first external electrode 131 is disposed on the third surface, and the second external electrode 132 is disposed on the fourth surface, and since the configurations of the first external electrode 131 and the second external electrode 132 are similar, the description below will be based on the first external electrode 131, but this will be considered to include the description of the second external electrode 132. In addition, the regions 141 and 142 containing Ni, Al and Cu and the first and second internal electrodes 121 and 122 are also described based on the region 141 containing first Ni, Al and Cu and the first internal electrode 121, but this is considered to include a description of the region 142 including second Ni, Al, and Cu and the second internal electrode 122.

In an embodiment, in the region 141 containing Ni, Al and Cu, when a portion adjacent to the first internal electrode 121 is referred to as a first region P1 and a portion adjacent to the first external electrode 131 is referred to as a second region P2, an Al-Ni alloy may be disposed in the first region P1, and an Al-Cu alloy may be disposed in the second region P2.

In an embodiment, the region 141 containing Ni, Al, and Cu may be formed of Al-Ni alloy and Al-Cu alloy. Referring to FIG. 6, the region 141 containing Ni, Al, and Cu may be composed of two layers including the first region P1 formed of Al-Ni alloy and the second region P2 formed of Al-Cu alloy.

In addition, the Ni content of the first region P1 decreases in the direction from the first internal electrode 121 to the first external electrode 131, and the Cu content of the second region P2 may decrease in the direction from the first external electrode 131 to the first internal electrode 121.

In addition, the Al content of the first region P1 increases from the first internal electrode 121 to the first external electrode 131, and the Al content of the second region P2 may increase in the direction from the first external electrode 131 to the first internal electrode 121. Accordingly, the Al content may have a maximum value at the boundary between the first region P1 and the second region P2.

In an embodiment, the first region P1 may be disposed inside the body 110, and at least a portion of the second region P2 may be disposed outside the body 110. The first region P1 may be disposed inside the body 110 to contact the end of the first internal electrode 121, and the second region P2 may be disposed to contact the base electrode layer 131a outside the body 110.

Referring to FIG. 5, the body 110 may include grooves G1 and G2 where the ends of the first and second internal electrodes 121 and 122 are spaced apart from one surface of the body 110. The grooves G1 and G2 may be formed by differences in shrinkage behavior between the first and second internal electrodes 121 and 122 and the dielectric layer 111 during the sintering process of the body 110. In the case in which the firing shrinkage rate of the first and second internal electrodes 121 and 122 is greater than the firing shrinkage rate of the dielectric layer 111, a problem may occur in which the connectivity between the first and second internal electrodes 121 and 122 and the first and second external electrodes 131 and 132 is reduced due to the grooves G1 and G2. In the related art, attempts were made to solve this problem by adding a process to remove the protruding dielectric layer using a sandblasting method or the like. In contrast, according to an embodiment of the present disclosure, as at least portions of the regions 141 and 142 containing Ni, Al and Cu are disposed in the grooves G1 and G2, connectivity between the first and second internal electrodes 121 and 122 and the first and second external electrodes 131 and 132 may be improved without a separate polishing process. At this time, the first region P1 is disposed to contact the end of the first internal electrode 121 within the grooves G1 and G2, and at least a portion of the second region P2 may be disposed within the grooves G1 and G2, and the remaining area of the second region P2 may be disposed outside the body 110.

Referring to FIG. 7, in an embodiment, a region 141' containing Ni, Al, and Cu may include an intermediate region Pc' disposed between a first region P1' and a second region P2'. The region 141' containing Ni, Al and Cu may be composed of three layers including the first region P1' formed of Al-Ni alloy, the second region P2' formed of Al-Cu alloy, and the intermediate region (Pc') disposed between the first region P1' and the second region P2'.

In an embodiment, the Al content of the intermediate region Pc' may be higher than the Al content of the first and second regions P1' and P2'.

In an embodiment, the intermediate region Pc' may not include Ni and Cu and may be substantially formed of Al.

Additionally, the intermediate region Pc' may have an Al content of 99 at% or more, and at least a portion of the intermediate region Pc' may have an Al content of 100 at% or more.

In this case, in the first region P1', the Ni content decreases and the Al content increases, from the internal electrode toward the external electrode, and in the second region P2', the Cu content may decrease and the Al content may increase, from the external electrode toward the internal electrode. Additionally, the Al content may be maintained at a relatively constant level in the intermediate region Pc'.

However, the intermediate region Pc' does not necessarily need to be formed of Al, and in an embodiment, a Ni-Al-Cu alloy may be disposed in the intermediate region Pc'. In this case, the Al content may decrease as it approaches the first region P1' and the second region P2' from the central portion of the intermediate region Pc'. In addition, the Ni content may decrease and the Cu content may increase as it moves from the boundary between the first region P1' and the intermediate region Pc' to the boundary between the second region P2' and the intermediate region Pc' .

In an embodiment, the first region P1' may be disposed inside the body 110, and at least a portion of the second region P2' may be disposed outside the body 110. At this time, the intermediate region Pc' may be disposed inside the body 110.

In an embodiment, a region 141" containing Ni, Al, and Cu may be formed of Ni-Al-Cu alloy. Referring to FIG. 8, the region containing Ni, Al, and Cu may be disposed as one layer formed of Ni-Al-Cu alloy. However, the contents of Ni, Al, and Cu in the area adjacent to the internal electrode and the area adjacent to the external electrode do not need to be the same. The region 141" containing Ni, Al, and Cu may have a concentration gradient in which the Ni content decreases and the Cu content increases from the end of the internal electrode toward the external electrode, and the Al content may be highest in the central portion of the region 141" containing Ni, Al, and Cu in the second direction.

On the other hand, the analysis of elements contained in regions 141 and 142 including Ni, Al, and Cu may be performed using scanning electron microscopy (SEM) and energy dispersive spectrometry (EDS), on cross section in the first and second directions, passing through the center of the body 110 in the third direction.

In addition, referring to FIG. 7, changes in Al, Ni, and Cu contents may be analyzed by performing a line profile along a line L1 from the end of the first internal electrode 121 to the inside of the base electrode layer.

For a detailed example, a cross-section of the multilayer electronic component 100 cut in the first and second directions from the center thereof in the third direction is scanned with a scanning electron microscope (SEM) at 20,000 magnification to obtain an image, and then, line profiles may be performed for Al, Ni and Cu. In the line profile graph obtained at this time, the portion where the Ni content is almost constant along L1 and then begins to decrease may be referred to as the boundary between the first and second internal electrodes 121 and 122 and the regions 141 and 142 containing Ni, Al and Cu, and the portion where the Cu content increases and then begins to converge almost uniformly may be referred to as the boundary between the regions 141 and 142 containing Ni, Al and Cu and the base electrode layers 131a and 132a. In addition, the area from where the Al content begins to increase along L1 to the portion where the Al content decreases after passing the peak of the Al content and then converges may be referred to as the regions 141 and 142 containing Ni, Al, and Cu.

The first and second external electrodes 131 and 132 may be disposed on the body 110.

As illustrated in FIG. 2, the first and second external electrodes 131 and 132 may include first and second external electrodes 131 and 132 disposed on the third and fourth surfaces 3 and 4 of the body 110, respectively, and connected to the first and second internal electrodes 121 and 122 through the regions 141 and 142 containing Ni, Al and Cu, respectively.

The first and second external electrodes 131 and 132 may include Al and Cu. As the first and second external electrodes 131 and 132 contain Al and Cu, the regions 141 and 142 containing Ni, Al and Cu may be easily formed when forming the first and second external electrodes 131 and 132.

In this embodiment, a structure in which the multilayer electronic component 100 has two external electrodes 131 and 132 is described, but the number or shape of the first and second external electrodes 131 and 132 may be changed depending on the shape of the first and second internal electrodes 121 and 122 or other uses.

The first and second external electrodes 131 and 132 may include base electrode layers 131a and 132a disposed on the body 110.

Referring to FIG. 6, in an embodiment, the base electrode layers 131a and 132a may include Al (M2), Cu (M1), and glass (G). For example, the base electrode layers 131a and 132a may be fired electrodes formed through heat treatment after applying a paste containing Al, Cu, and glass.

In the related art, a fired electrode is generally formed using a paste containing Cu and glass, and the glass included in the paste has a melting point of 580 °C to 630 °C. When a paste containing Cu and glass is applied to the body and a sintering process, which is a heat treatment process at 650 to 900 °C, is performed, during the sintering process, necking of Cu particles occurs first, and the glass melts to fill the empty space. However, glass is a non-conductor, and it is difficult to sufficiently fill the empty space between the internal and external electrodes with Cu particles alone, causing a problem in that the contact between the internal and external electrodes is reduced. In this case, necking of Cu particles may refer to a phenomenon in which Cu particles are connected as one particle by diffusion at the contact area.

On the other hand, according to an embodiment of the present disclosure, the base electrode layers 131a and 132a may further include Al in addition to Cu and glass. The melting point of Al is about 660 °C, which is lower than the firing temperature of a typical firing electrode and has a melting point similar to a melting point of glass. Therefore, Al particles are melted during the sintering process and may easily fill the empty space between the internal and external electrodes. In addition, since Al may stably form an alloy with Ni and Cu, wettability of the conductive material between the internal electrode and the base electrode layer may be improved. Thus, when forming the base electrode layers 131a and 132a, improving the connectivity between the base electrode layers 131a and 132a and the first and second internal electrodes 121 and 122 may be facilitated. In addition, as the base electrode layers 131a and 132a contain Al in addition to Cu and glass, Al may partially replace the role of glass during the sintering process and thus, the glass content may be lowered, and the equivalent series resistance (ESR) may also be lowered.

Al contained in the paste for forming the base electrode layer may be contained in the form of powder, and during the sintering process, Al and glass melt at approximately 660 °C or higher. A portion of the molten Al penetrates into the grooves G1 and G2 where the internal electrodes are depressed to reduce the interfacial energy, and by forming an alloy with Ni, the regions 141 and 142 containing Ni, Al, and Cu with strong metallic bonds may be formed. Additionally, a portion of the molten Al may penetrate into the empty space between necked Cu particles, and the portion thereof in contact with Cu may form an alloy with Cu, allowing the base electrode layer to have high density.

In a detailed example of Al and Cu included in the paste for forming the base electrode layer, as Al, Al powder with a particle size in a range from 50 nm to 30,000 nm may be used, and as Cu, Cu powder with a particle size in a range from 50 nm to 30,000 nm may be used.

In an embodiment, the base electrode layers 131a and 132a may be disposed to contact at least a portion of an end of the dielectric layer 111 disposed between the first and second internal electrodes 121 and 122. Additionally, at least one of Al, Cu, and glass included in the base electrode layers 131a and 132a may be disposed to contact at least a portion of the end of the dielectric layer 111 disposed between the first and second internal electrodes 121 and 122. Additionally, the base electrode layers 131a and 132a may be disposed to cover the regions 141 and 142 containing Ni, Al, and Cu.

In an embodiment, at least a portion of the Al included in the base electrode layers 131a and 132a may be alloyed with Cu to form an Al-Cu alloy. Referring to FIG. 6, the Al-Cu alloy (M3) may be disposed to surround at least a portion of Al (M2) included in the base electrode layer 131a. Additionally, Cu (M1) may be disposed to surround at least a portion of the Al-Cu alloy (M3). At this time, the Al-Cu alloy (M3) may have a concentration gradient in which the Al content decreases and the Cu content increases from the area adjacent to Al (M2) toward the area adjacent to Cu (M1).

Referring to FIG. 2, the first and second external electrodes 131 and 132 may include plating layers 131b and 132b disposed on the base electrode layers 131a and 132a.

The plating layers 131b and 132b may serve to improve mounting characteristics. The types of plating layers 131b and 132b are not particularly limited, and may be a plating layer containing at least one of Ni, Sn, Pd, and alloys thereof, and may be formed of multiple layers.

For more detailed examples of the plating layers 131b and 132b, the plating layers 131b and 132b may be Ni plating layers or Sn plating layers, and may be in the form in which a Ni plating layer and a Sn plating layer are formed sequentially on the base electrode layers 131a and 132a, and may be in the form in which the Sn plating layer, Ni plating layer, and Sn plating layer are formed sequentially. Additionally, the plating layers 131b and 132b may include a plurality of Ni plating layers and/or a plurality of Sn plating layers.

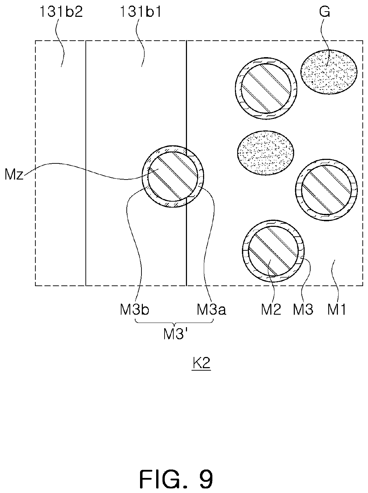

The first and second external electrodes 131 and 132 include Ni plating layers 131b1 and 132b1 disposed on the base electrode layers 131a and 132a, and Al and Al-Ni alloy may be disposed in at least a portion of the interface area between the base electrode layers 131a and 132a and the Ni plating layers 131b1 and 132b1. Referring to FIG. 9, Al (Mz) disposed at the interface area between the base electrode layer 131a and the Ni plating layer 131b1 may be disposed over a portion of the base electrode layer 131a and a portion of the Ni plating layer 131b1. In addition, in the portion disposed on the base electrode layer 131a in the Al (Mz) disposed at the interface area between the base electrode layer 131a and the Ni plating layer 131b1, Al-Cu alloy (M3a) may be disposed in the area in contact with Cu (M1), and in the portion disposed on the Ni plating layer 131b1 in the Al (Mz) disposed in the interface area between the base electrode layer 131a and the Ni plating layer 131b1, Al-Ni alloy (M3b) may be disposed in a portion in contact with the Ni plating layer 131b1. Accordingly, Al (Mz) may be disposed to be at least partially covered by a layer M3' including Al-Cu alloy (M3a) and Al-Ni alloy (M3b).

At this time, an Sn plating layer 131b2 may be further disposed on the Ni plating layer 131b1.

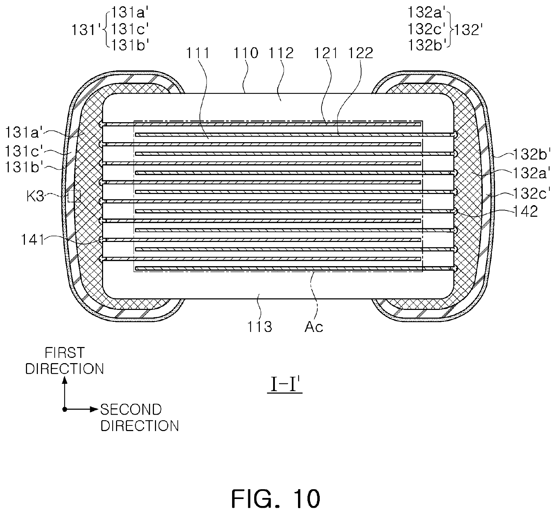

Referring to FIG. 10, in an embodiment, the external electrodes 131' and 132' may include conductive resin layers 131c' and 132c' disposed on the base electrode layers 131a' and 132a' and containing conductive particles and resin. Additionally, the external electrodes 131' and 132' may further include plating layers 131b' and 132b' disposed on the conductive resin layers 131c' and 132c'.

There is no need to specifically limit the conductive particles Mf included in the conductive resin layers 131c' and 132c', and for example, examples of the conductive particles Mf may include Cu, Ni, Sn, Pd, Pt, Au, Ag, Pb and/or alloys thereof, and the like, and in more detail, may include at least one of Cu, Ag, Sn, and alloys thereof.

The conductive resin layers 131c' and 132c' serve to electrically connect the plating layers 131b' and 132b' and the base electrode layers 131a' and 132a', and may absorb tensile stress generated in a mechanical or thermal environment to prevent cracks from occurring when mounting electronic components on a board, and may serve to protect multilayer electronic components from the bending impact of the substrate.

The resin Rs included in the conductive resin layers 131c' and 132c' may include a thermosetting resin having electrical insulation properties.

At this time, the thermosetting resin may be, for example, an epoxy resin, and the present disclosure is not limited thereto. For example, the thermosetting resin may be a bisphenol A resin, glycol epoxy resin, Noblac epoxy resin, or a derivative thereof that has a low molecular weight and is liquid at room temperature.

In an embodiment, the conductive particles Mf included in the conductive resin layers 131c' and 132c' are Cu particles, and Al and Al-Cu alloy may be disposed in at least a portion of the interface area between the base electrode layers 131a' and 132a' and the conductive resin layers 131c' and 132c'.

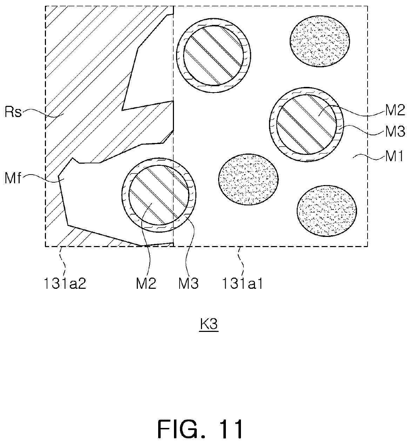

Referring to FIG. 11, Al contained in the base electrode layer 131a' diffuses into the interface area with the conductive resin layer 131c', and a portion of the diffused Al may form Al-Cu alloy (M3) with Cu particles Mf included in the conductive resin layer 131c'. In addition, Al (M2) has good wettability with the Cu particles Mf among the Cu particles Mf and the resin (Rs), and thus, has a high probability of diffusing toward the Cu particles Mf, and may be difficult to be distinguished due to having a similar shape to Al disposed in the base electrode layer 131a'. Additionally, it may be difficult to clearly distinguish the boundary between the Cu particles Mf included in the conductive resin layer 131c' and the Cu (M1) included in the base electrode layer 131a'.

On the other hand, the multilayer electronic component 100 according to an embodiment may include a body 110 including a dielectric layer 111 and the first and second internal electrodes 121 and 122 alternately disposed with the dielectric layer, and first and second external electrodes 131 and 132 disposed on the body 110 and including base electrode layers 131a and 132a connected to the internal electrodes. The base electrode layer may include Al, Cu, and glass.

As described above, since the base electrode layers 131a and 132a further contain Al in addition to Cu and glass, Al is melted during the sintering process and may easily fill the empty space between the internal electrodes and the external electrodes, and may stably form an alloy with Ni and Cu, and thus, the connectivity between the base electrode layers 131a and 132a and the first and second internal electrodes 121 and 122 may be improved. In addition, Al may partially replace the role of glass during the sintering process, thereby lowering the glass content and thereby lowering equivalent series resistance (ESR).

As set forth above, reliability of multilayer electronic components may be improved.

Contact between the internal electrode and the external electrode may be improved.

Although the embodiment of the present disclosure has been described in detail above, the present disclosure is not limited by the above-described embodiment and the accompanying drawings, but is intended to be limited by the appended claims. Accordingly, various types of substitution, modification and change will be possible by those skilled in the art within the scope not departing from the technical spirit of the present disclosure described in the claims, and it is also said that it falls within the scope of the present disclosure.

In addition, the expression 'an/an embodiment' used in the present disclosure does not mean the same embodiment as each other, and is provided to emphasize and explain different unique features. However, an embodiment presented above is not excluded from being implemented in combination with the features of another embodiment. For example, even if a matter described in one detailed embodiment is not described in another embodiment, it may be understood as a description related to another embodiment unless a description contradicts or contradicts the matter in another embodiment.

The terms used in the present disclosure are used to describe only an embodiment, and are not intended to limit the present disclosure. In this case, the singular expression includes the plural expression unless the context clearly indicates otherwise.

While example embodiments have been illustrated and described above, it will be apparent to those skilled in the art that modifications and variations could be made without departing from the scope of the present disclosure as defined by the appended claims.

## Claims

1. A multilayer electronic component comprising:
a body including a dielectric layer and an internal electrode alternately disposed with the dielectric layer;
an external electrode disposed on the body and connected to the internal electrode; and
a region containing Ni, Al and Cu,
wherein the internal electrode includes Ni, and
the external electrode contains Al and Cu.

2. The multilayer electronic component of claim 1, wherein the region containing Ni, Al, and Cu, includes a first region adjacent to the internal electrode, and a second region adjacent to the external electrode, and wherein an Al-Ni alloy is disposed in the first region, and an Al-Cu alloy is disposed in the second region.

3. The multilayer electronic component of claim 2, wherein the first region has a Ni content decreasing in a direction from the internal electrode to the external electrode, and the second region has a Cu content decreasing in a direction from the external electrode to the internal electrode.

4. The multilayer electronic component of claim 2, wherein the first region has an Al content increasing in a direction from the internal electrode to the external electrode, and the second region has an Al content increasing in a direction from the external electrode to the internal electrode.

5. The multilayer electronic component of claim 2, wherein the first region is disposed inside of the body, and at least a portion of the second region is disposed outside of the body.

6. The multilayer electronic component of claim 2, wherein when a portion between the first region and the second region is referred to as an intermediate region, an atomic percentage of Al contained in the intermediate region is higher than an atomic percentage of Al contained in the first and second regions.

7. The multilayer electronic component of claim 6, wherein the intermediate region has an Al content of 99 at% or more, and at least a portion of the intermediate region has an Al content of 100 at%.

8. The multilayer electronic component of claim 6, wherein in the first region, a Ni content decreases and an Al content increases in a direction from the internal electrode to the external electrode, and in the second region, a Cu content decreases and an Al content increases in a direction from the external electrode to the internal electrode.

9. The multilayer electronic component of claim 6, wherein the first region is disposed inside the body, and at least a portion of the second region is disposed outside the body.

10. The multilayer electronic component of claim 6, wherein the intermediate region is located inside the body.

11. The multilayer electronic component of claim 1, wherein the region containing Ni, Al and Cu is substantially formed of a Ni-Al-Cu alloy.

12. The multilayer electronic component of claim 11, wherein in the region containing Ni, Al, and Cu, a Ni content decreases and a Cu content increases in a direction from the internal electrode to the external electrode.

13. The multilayer electronic component of claim 11, wherein the region containing Ni, Al, and Cu has a highest Al content in a central region, the Al content decreases from the central region toward the internal electrode, and the Al content decreases from the central region toward the external electrode.

14. The multilayer electronic component of claim 1, wherein the region containing Ni, Al, and Cu includes a first region adjacent to the internal electrode, a second region adjacent to the external electrode, and an intermediate region between the first region and the second region, wherein an Al-Ni alloy is disposed in the first region, an Al-Cu alloy is disposed in the second region, and a Ni-Al-Cu alloy is disposed in the intermediate region.

15. The multilayer electronic component of claim 1, wherein the region containing Ni, Al and Cu is disposed between the internal electrode and the external electrode.
